# EUROPÄISCHE PATENTSCHRIFT

(11) **EP 1 754 632 B1**
(45) Veröffentlichungstag und Bekanntmachung des Hinweises auf die Patenterteilung: **09.01.2008**
(21) Anmeldenummer: 06013778.3
(22) Anmeldetag: 04.07.2006
(51) Int. Cl.: B60R 13/04, B60R 13/02

(54) **Haltevorrichtung, vorzugsweise zur Befestigung eines Bauteils an einer Fahrzeugkarosse**
Holding device, preferably for attaching a part to a vehicle body.
Dispositif support, de préférence pour la fixation d'une pièce sur la carrosserie d'un véhicule

(30) Priorität: 17.08.2005 DE 102005038801
(43) Veröffentlichungstag der Anmeldung: 21.02.2007
(73) Patentinhaber: REHAU AG + Co, 95111 Rehau (DE)
(72) Erfinder: Schmidt, Udo, 95028 Hof (DE)

(56) Entgegenhaltungen:
- DE-A1- 4 137 707
- US-A1- 2002 101 096

## Beschreibung

Die Erfindung bezieht sich auf eine Haltevorrichtung, welche vorzugsweise zur Befestigung eines Bauteils an einer Fahrzeugkarosse vorgesehen ist, die wenigstens einen Halteabschnitt zur Befestigung des Bauteils aufweist, und die zumindest einen Positionierabschnitt aufweist, der wenigstens an einem Punkt einer Fläche der Fahrzeugkarosse zur Positionierung der Haltevorrichtung an der Fahrzeugkarosse zumindest abschnittsweise in Anlage bringbar ist. Dokument US 2002/0101096 A1 offenbart eine solche Haltevorrichtung.

Bislang werden Haltevorrichtungen, beispielsweise Halteleisten, zur Fixierung von Bauteilen wie Abdeck- oder Wasserfangleisten an einer Fahrzeugkarosse mit dieser derart verbunden, dass sie vernietet, geclipst und geklebt oder in weniger Anwendungsfällen nur geklebt werden. Die Halteleisten sind hierbei entweder aus Metall oder Kunststoff gefertigt. Entscheidend bei der Fixierung der genannten Funktionsleisten ist die eindeutige Positionierung der Leisten an der Fahrzeugkarosse. Als Beispiel hierfür ist die Positionierung von Abdeck- oder Wasserfangleisten in Bezug auf die Oberkante der A-Säule einer Fahrzeugkarosse genannt. Die eindeutige Positionierung dieser Leiste an der A-Säule verhindert eine Spaltbildung zwischen A-Säule und Abdeck- oder Wasserfangleiste und ergibt somit eine dichtende Verbindung. Bei vernieteten oder auch geclipsten und verklebten Ausführungen erfolgt die Positionierung der Funktionsleisten über Löcher, die in die A-Säule gebohrt werden. Diese Löcher, durch welche die Nieten oder Clips hindurch gesteckt werden, geben eine definierte Position der Funktionsleiste entlang der A-Säule vor.

Der Nachteil von vernieteten Ausführungen liegt in einem hohen Fertigungsaufwand für das Bohren der Löcher in der A-Säule und das Vernieten der Halteleiste. Auch bei geclipsten und verklebten Ausführungen ist ein hoher Fertigungsaufwand für das Bohren der Löcher in der A-Säule erforderlich, und zudem ist bei dieser Ausführung ein erheblicher Konfektionsaufwand bauteilseitig erforderlich.

Nachteilig bei den zuvor genannten Ausführungen ist darüber hinaus die Tatsache, dass Bohrungen in der A-Säule unbedingt abgedichtet werden müssen.

Die Positionierung einer Halteleiste kann ebenso durch die Verwendung von Schablonen erfolgen, die auf das Fahrzeug aufgesetzt und nach der Positionierung entfernt werden. Dieser Vorgang muss auf der gegenüberliegenden Fahrzeugseite wiederholt werden. Der Montagewerker muss jeweils die Schablone aufnehmen, auf das Fahrzeug setzen, die Halteleiste positionieren, anschließend die Schablone wieder entfernen und ablegen. Diese Montageoperationen erfordern sehr viel Fertigungszeit, und darüber hinaus muss im Ersatzteilgeschäft jede Reparaturwerkstatt mit einer solchen Positionierschablone ausgestattet werden.

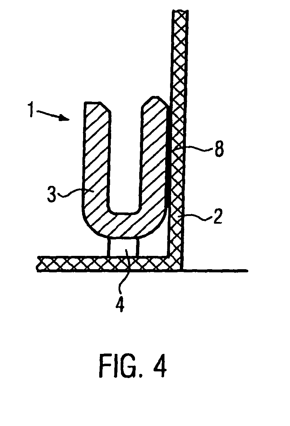

Bei den bekannten ausschließlich geklebten Halteleisten sind bereits Positionierhilfen vorgesehen, wobei die Anlageseite der Halteleiste auf der Abstellung des A-Säulen-Bleches steht und dadurch eine eindeutige Positionierung der Halteleiste gewährleistet (siehe Figur 4). Nachteilig bei dieser Ausführung ist die Notwendigkeit einer definierten Gestaltungsform der A-Säule derart, dass die Anlageseite der Halteleiste senkrecht auf der Abstellung des A-Säulen-Bleches stehen muss. Bei hiervon abweichenden Gestaltungsformen der A-Säule ist die bekannte Positionierhilfe bei ausschließlich geklebten Halteleisten nicht anwendbar. Weiterhin birgt diese Ausführung der Halteleisten den Nachteil, dass eine Positionierung der Halteleiste im Ersatzteilfall erschwert oder gar nicht möglich ist, da diese unmittelbar neben der Windschutzscheibe sitzt. Kommt es bei der Montage der Windschutzscheibe zum Austreten von Kleber - wobei der Raum zur Befestigung der Halteleiste zur Aufnahme austretenden Klebers bei der Windschutzscheibenmontage bewusst genutzt wird - so wird eine eindeutige Positionierung der Halteleiste verhindert. Dies hat zur Folge, dass die Windschutzscheibe ausgebaut werden muss.

Aufgabe der Erfindung ist es daher, eine Haltevorrichtung der eingangs genannten Art zu verbessern, so dass einerseits eine einfache Positionierung der Haltevorrichtung an einer Fahrzeugkarosse bei gleichzeitiger Unabhängigkeit von der Gestaltungsform der Fahrzeugkarosse möglich ist.

Diese Aufgabe wird erfindungsgemäß gelöst durch eine Haltevorrichtung der eingangs genannten Art, bei der die Haltevorrichtung zumindest einen Positionierabschnitt aufweist, der nach erfolgter Positionierung und Montage der Haltevorrichtung von dieser lösbar ist.

Es hat sich gezeigt, dass durch solch einen Positionierabschnitt eine einfache, schnelle und genaue Positionierung der Haltevorrichtung an der Fahrzeugkarosse ermöglicht wird, wobei eine hohe Gestaltungsfreiheit bezüglich des Positionierabschnitts gegeben ist. Dabei bedarf es keinerlei Bohr-, Schweiß- oder Nietarbeiten an der Fahrzeugkarosse. Es hat sich weiterhin gezeigt, dass die erfindungsgemäße Haltevorrichtung an keine spezielle Gestaltung des Fahrzeugkarossen-Querschnitts gebunden ist.

Darüber hinaus hat es sich gezeigt, dass die erfindungsgemäße Haltevorrichtung keiner zusätzlichen Schablonen bedarf, die vor dem Montagevorgang auf die Fahrzeugkarosse aufgesetzt werden. Damit erspart sie dem Fahrzeughersteller die Kosten für zusätzliche Operationen wie Aufnehmen, Auflegen und Ablegen der Schablone.

Es hat sich außerdem gezeigt, dass der abgetrennte Positionierabschnitt entweder wiederverwendet oder wiederverwertet werden kann, woraus enorme wirtschaftliche Vorteile bei gleichzeitig hoher Ressourceneinsparung entstehen.

Weiterhin hat es sich gezeigt, dass die erfindungsgemäße Haltevorrichtung eine sehr einfache und genaue Montage im Ersatzteilfall erlaubt.

Von Vorteil kann es sein, dass die Haltevorrichtung aus polymerem Material besteht. Dadurch lässt sich die Haltevorrichtung sehr kostengünstig bei gleichzeitig niedrigem Gewicht fertigen.

Von Vorteil kann es weiterhin sein, dass die Haltevorrichtung in einem Spritzgussverfahren hergestellt ist. Dadurch erfolgt eine kostengünstige und schnelle Herstellung.

Vorzugsweise ist die Haltevorrichtung leistenförmig ausgeführt. Dadurch gelingt eine sehr genaue und schnelle Befestigung auch bei größerer longitudinaler Ausdehnung der Haltevorrichtung, wodurch der Montagaufwand erheblich verringert wird. Zusätzlich reduziert sich durch diese Ausführung die Anzahl der zu montierenden Haltebauteile.

Von Vorteil kann es darüber hinaus sein, dass der zumindest eine Halteabschnitt beim montierten Bauteil dieses zumindest abschnittsweise umgreift. Daraus resultiert eine dauerhafte und sichere Verbindung.

Es kann sich als günstig erweisen, dass der zumindest eine Halteabschnitt einen im Wesentlichen U-förmigen Querschnitt aufweist. Dadurch gelingt eine besonders stabile und sichere Verbindung zwischen dem Halteabschnitt und dem Bauteil.

Weiterhin kann es sich als günstig erweisen, dass der der Fahrzeugkarosse in montiertem Zustand zugewandte Schenkel des Halteabschnitts zumindest abschnittsweise parallel zur Oberfläche der Fahrzeugkarosse anordnungsbar ist. Dadurch gelingt eine gute Anlage des Halteabschnitts an der Fahrzeugkarosse, die dauerhaft und stabil ist.

Vorteilhaft kann es darüber hinaus sein, dass der Halteabschnitt zumindest abschnittsweise stoffschlüssig mit der Oberfläche der Fahrzeugkarosse verbunden ist. Dadurch ist eine dauerhafte und feste Verbindung zwischen Halteabschnitt und Fahrzeugkarosse gewährleistet.

Ebenso kann es von Vorteil sein, dass die Haltevorrichtung zwei oder mehr Halteabschnitte aufweist. Daraus resultiert eine besonders stabile und verlässliche Verbindung zwischen Halteabschnitt und Bauteil.

Zudem kann es von Vorteil sein, dass die Haltevorrichtung leistenförmig ausgeführt ist und drei oder mehr Halteabschnitte aufweist, wobei jeweils zwei benachbarte Halteabschnitte den gleichen Abstand zueinander aufweisen. Dadurch gelingt einerseits eine sehr genaue und schnelle Befestigung auch bei größerer longitudinaler Ausdehnung der Haltevorrichtung, andererseits ergibt sich hierdurch eine besonders stabile und sichere Verbindung zwischen Halteabschnitt und Bauteil mit gleichmäßiger mechanischer Beanspruchung.

Vorzugsweise ist der zumindest eine Positionierabschnitt einstückig mit dem Halteabschnitt verbunden, wobei er aus dem gleichen Material besteht. Dadurch ergibt sich eine sehr einfache, stabile und kostengünstige Verbindung zwischen Positionierabschnitt und Halteabschnitt.

Es kann von Vorteil sein, dass der zumindest eine Positionierabschnitt einmalig lösbar mit dem Halteabschnitt verbunden ist. Dadurch ergibt sich eine besonders einfache und schnelle Möglichkeit zum Abtrennen des Positionierabschnitts vom Halteabschnitt.

Es kann weiterhin von Vorteil sein, wenn der zumindest eine Positionierabschnitt mit dem Schenkel des Halteabschnitts verbunden ist, der der Fahrzeugkarosse in montiertem Zustand zugewandt ist. Daraus resultiert zum einen eine bessere Anlage des Halte- und Positionierabschnitts an der Fahrzeugkarosse und damit eine genauere Positionierung, zum anderen ergibt sich eine Krafteinleitungsstelle, die bezüglich der mechanischen Belastung des Halteabschnitts während des Abtrennens des Positionierabschnitts günstiger liegt.

Es kann sich als günstig erweisen, dass der zumindest eine Positionierabschnitt derart mit dem Halteabschnitt verbunden ist, dass die Verbindungsstelle als Sollbruchstelle ausgeführt ist. Dadurch lässt sich ein schnelles und einfaches Abtrennen des Positionierabschnitts vom Halteabschnitt an einer definierten Stelle realisieren.

Ebenso kann es sich als günstig erweisen, dass die Sollbruchstelle weiter vom gekrümmten Teil des Halteabschnitts beabstandet ist, als das Ende des Schenkels, der der Fahrzeugkarosse im montierten Zustand des Halteabschnitts abgewandt ist. Durch diese Anordnung der Sollbruchstelle ist gewährleistet, dass der Positionierabschnitt soweit ausgelenkt werden kann, dass es zu einem Bruch an der Sollbruchstelle kommt.

Weiterhin kann es sich als günstig erweisen, dass die Sollbruchstelle benachbart ist zu dem Bereich des Halteabschnitts, der stoffschlüssig mit der Oberfläche der Fahrzeugkarosse verbunden ist. Daraus resultiert eine nur geringe mechanische Belastung im Bereich der stoffschlüssigen Verbindung beim Ablösen des Positionierabschnitts vom Halteabschnitt.

Vorzugsweise weist der zumindest eine Positionierabschnitt einen Positionieranschlag auf. Dieser Positionieranschlag erlaubt ein einfaches, schnelles und genaues Anlegen des Positionierabschnittes an der Fahrzeugkarosse.

Es kann von Vorteil sein, dass der Positionieranschlag einen vorspringenden Steg aufweist, der zumindest abschnittsweise an einer Oberfläche der Fahrzeugkarosse in Anlage bringbar ist. Durch diese Form des Positionieranschlags gelingt die Anlage des Positionierabschnitts an der Fahrzeugkarosse besonders einfach und schnell.

Dabei kann es sich als günstig erweisen, dass der vorspringende Steg im Wesentlichen senkrecht zu dem Teil des Positionierabschnitts angeordnet ist, der mit dem Halteabschnitt verbunden ist. Dadurch ergibt sich eine besonders sichere und genaue Anlage und damit Positionierung des Positionierabschnitts an der Fahrzeugkarosse.

Es kann sich als günstig erweisen, dass der zumindest eine Positionierabschnitt einen Kraftangriffshebel zum Lösen des Positionierabschnitts vom montierten Halteabschnitt aufweist. Damit gelingt ein sehr einfaches und schnelles Lösen des Positionierabschnitts vom montierten Halteabschnitt ohne die Verwendung von zusätzlichem Werkzeug und damit auch ohne Gefahr der Beschädigung der Fahrzeugkarosse.

Weiterhin kann es sich als günstig erweisen, dass der Kraftangriffshebel aus der Verlängerung des Teils des Positionierabschnitts gebildet wird, der mit dem Halteabschnitt verbunden ist. Daraus resultiert eine besonders einfache geometrische Anordnung des Kraftangriffshebels, die sich zugleich günstig auf die Krafteinleitung zum Abtrennen des Positionierabschnitts vom Halteabschnitt auswirkt.

Es kann darüber hinaus von Vorteil sein, dass die Haltevorrichtung zwei oder mehr Positionierabschnitte aufweist. Dadurch ist besonders gut gewährleistet, dass der Positionierabschnitt schnell und zugleich präzise an der Fahrzeugkarosse in Anlage bringbar ist.

Die Erfindung bezieht sich ebenso auf ein Bauteil, das mit einer Haltevorrichtung nach einem der vorangegangenen Ansprüche an einer Fahrzeugkarosse angeordnet ist.

Darüber hinaus bezieht sich die Erfindung auf ein Fahrzeug mit einer Haltevorrichtung nach einem der vorangegangenen Ansprüche.

Nachfolgend wird die Wirkungs- und Funktionsweise der Erfindung näher erläutert.

Es zeigen:
- Fig. 1: eine Ausführungsform der erfindungsgemäßen Haltevorrichtung in Anlage mit einem Teil der Fahrzeugkarosse im Querschnitt;

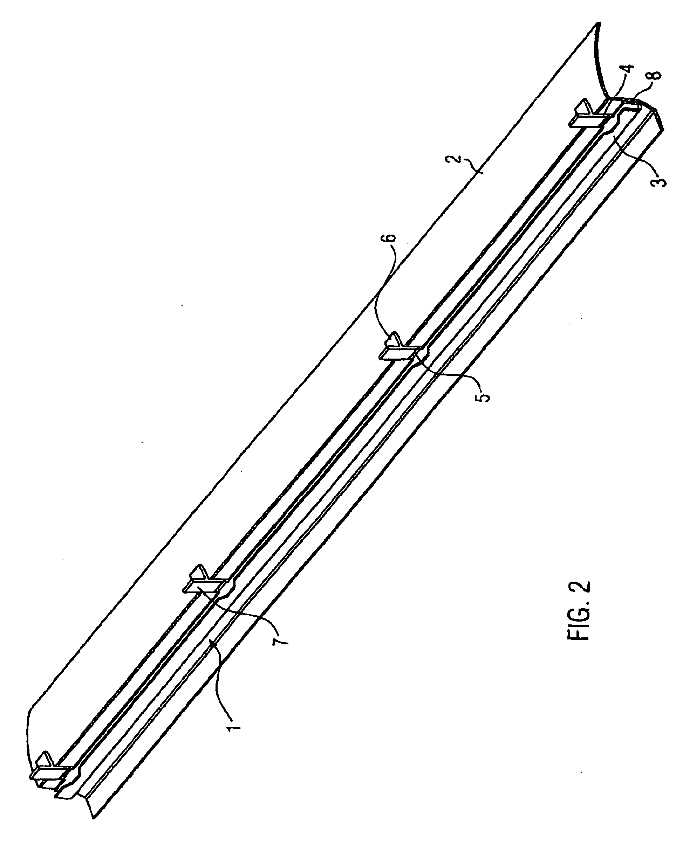

- Fig. 2: erfindungsgemäße Haltevorrichtung in Anlage mit einem Teil der Fahrzeugkarosse in dreidimensionaler Darstellung;

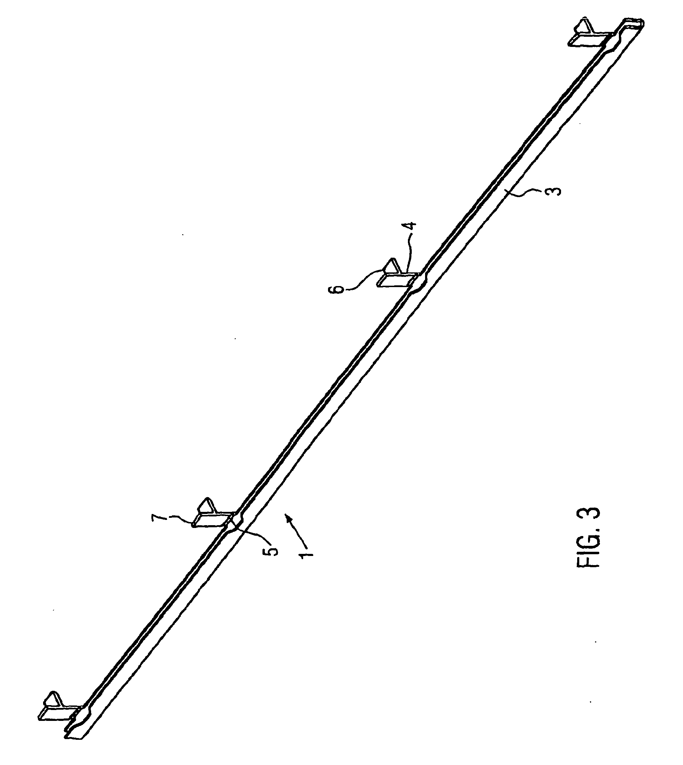

- Fig. 3: erfindungsgemäße Haltevorrichtung in dreidimensionaler Darstellung;
- Fig. 4: Halteleiste gemäß dem Stand der Technik.

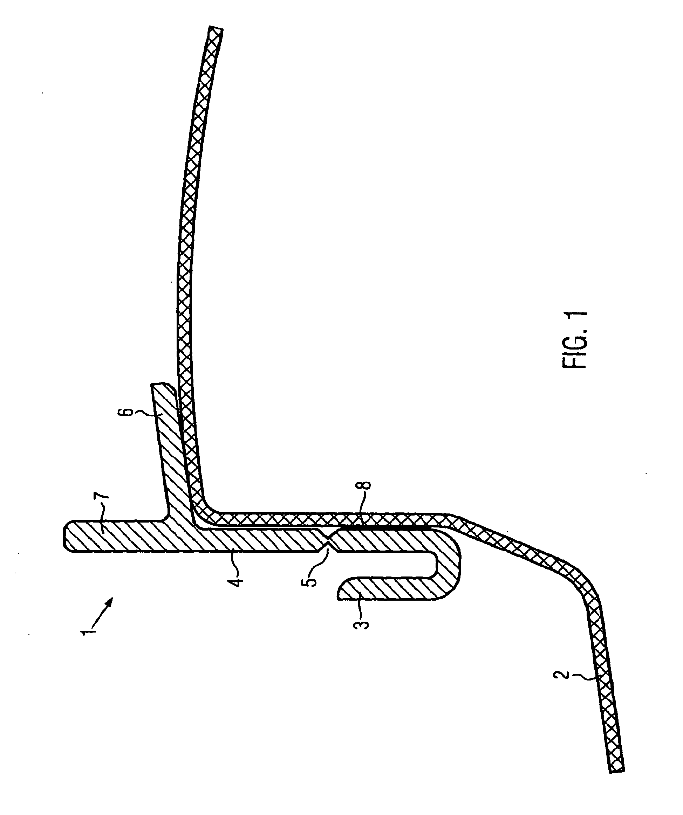

Fig. 1 zeigt im Querschnitt die Haltevorrichtung in Anlage an die Fahrzeugkarosse.

Die Haltevorrichtung 1 besteht aus polymerem Material. Sie ist leistenförmig ausgeführt und wurde im Spritzgussverfahren hergestellt. In der dargestellten Ausführungsform verfügt die Haltevorrichtung 1 über einen im Wesentlichen U-förmigen Halteabschnitt 3 und einen im Wesentlichen T-förmigen Positionierabschnitt 4. Selbstverständlich kann die Haltevorrichtung mehr Halte- und Positionierabschnitte aufweisen, wobei sowohl der Halteabschnitt als auch der Positionierabschnitt andersartig geformt sein können. Halteabschnitt 3 und Positionierabschnitt 4 sind einstückig miteinander verbunden und bestehen aus dem gleichen Material. Die Verbindungsstelle ist dabei als Sollbruchstelle 5 ausgeführt. Der Schenkel des im Wesentlichen U-förmigen Halteabschnitts 3, der bei montiertem Halteabschnitt 3 der Fahrzeugkarosse 2 zugewandt ist, ist im Wesentlichen parallel zur Oberfläche der Fahrzeugkarosse 2 angeordnet. Zwischen dem der Fahrzeugkarosse 2 zugewandten Schenkel des im Wesentlichen U-förmigen Halteabschnitts 3 und dem im Wesentlichen parallel dazu verlaufenden Abschnitt der Fahrzeugkarosse 2 ist ein Klebeband 8 angeordnet, das den Halteabschnitt 3 mit der Fahrzeugkarosse 2 stoffschlüssig verbindet. An den Schenkel des im Wesentlichen U-förmigen Halteabschnitts 3, welcher der Fahrzeugkarosse 2 in montiertem Zustand zugewandt ist, schließt sich der Positionierabschnitt an 4, wobei der Verbindungsbereich eine bewusst hergestellte Materialschwächung aufweist, die als Sollbruchstelle 5 beim Abtrennen des Positionierabschnitts 4 vom Halteabschnitt 3 dient. Die Sollbruchstelle 5 ist dabei weiter vom gekrümmten Teil des Halteabschnitts 3 beabstandet als das Ende des Schenkels, welcher der Fahrzeugkarosse 2 im montierten Zustand des Halteabschnitts 3 abgewandt ist. Zudem ist die Sollbruchstelle 5 benachbart zu dem Bereich des Halteabschnitts 3 angeordnet, der stoffschlüssig mit der Oberfläche der Fahrzeugkarosse 2 verbunden ist. Der Teil des Positionierabschnitts 4, der sich an die Sollbruchstelle 5 anschließt, ergibt sich aus der Verlängerung des der der Fahrzeugkarosse 2 zugewandten Schenkels des Halteabschnitts 3. Von dieser Verlängerung zweigt ein Steg in im Wesentlichen senkrechter Richtung ab, der als Positionieranschlag 6 dient.

Aus der Verlängerung des Schenkels des Halteabschnitts 3, welcher der Fahrzeugkarosse 2 im montierten Zustand des Halteabschnitts 3 zugewandt ist, ergibt sich an seinem Ende ein Kraftangriffshebel 7 zum Lösen des Positionierabschnitts vom montierten Halteabschnitt 3.

Nachfolgend wird die Wirkungs- und Funktionsweise der Erfindung näher erläutert.

Die Haltevorrichtung 1 wird zur Befestigung von Bauteilen an einer Fahrzeugkarosse 2 eingesetzt. Die Positionierung einer Haltevorrichtung an der Fahrzeugkarosse erfolgt bei ausschließlich geklebten Haltevorrichtungen mit Hilfe von an der Haltevorrichtung angebrachten Positionierhilfen, die sich auf einer Abstellung der Fahrzeugkarosse abstützen (siehe Fig. 4). Diese aus dem Stand der Technik bekannte Positionierhilfe ist dabei jedoch an definierte Gestaltungsformen der Fahrzeugkarosse derart gebunden, dass die Anlageseite der Haltevorrichtung senkrecht auf der Abstellung der Fahrzeugkarosse stehen muss, um eine eindeutige Positionierung der Haltevorrichtung zu gewährleisten. Bei der erfindungsgemäßen Haltevorrichtung 1 hingegen stützt sich der Halteabschnitt 3 nicht auf einer Abstellung der Fahrzeugkarosse 2 ab, sondern wird zunächst über den Positionieranschlag 6 mit einer Oberfläche der Fahrzeugkarosse 2 in Anlage gebracht. Der Positionieranschlag 6 liegt dabei zumindest abschnittsweise an der Oberfläche der Fahrzeugkarosse 2 an. Durch dieses Anlegen ergibt sich eine exakte Positionierung des Halteabschnitts 3 an der Fahrzeugkarosse 2. Im Anschluss an das Anlegen des Positionieranschlags 6 an die Fahrzeugkarosse 2 erfolgt das Entfernen des Liners, der das Klebeband 8 abdeckt, nach unten und der Halteabschnitt 3 der Haltevorrichtung 1 wird gegen die Fahrzeugkarosse 2 gedrückt, wodurch eine zumindest abschnittsweise stoffschlüssige Verbindung zwischen dem Halteabschnitt 3 und der Fahrzeugkarosse 2 resultiert. Nach dem Verbinden des Halteabschnitts 3 mit der Fahrzeugkarosse 2 an der durch den Positionieranschlag 6 definierten Position erfolgt die Aufbringung einer Kraft am Kraftangriffshebel 7 in der der Fahrzeugkarosse 2 abgewandten Richtung. Mit Beginn der Krafteinwirkung erfolgt ein Abheben des Positionierabschnitts 4 von der lackierten Fahrzeugkarosse 2, wodurch die Beschädigung des Lacks vermieden wird. Mit zunehmender Kraft bewegt sich der Positionierabschnitt 4 weiter in die der Fahrzeugkarosse 2 abgewandten Richtung, bis es zum Bruch im Bereich der Sollbruchstelle 5 kommt, wodurch der Positionierabschnitt 4 vom Halteabschnitt 3 abgelöst werden kann.

## Patentansprüche

1. Haltevorrichtung (1) zur Befestigung eines Bauteils an einer Fahrzeugkarosse (2), die wenigstens einen Halteabschnitt (3) zur Befestigung des Bauteils aufweist, und die zumindest einen Positionierabschnitt (4) aufweist, der wenigstens an einem Punkt einer Fläche der Fahrzeugkarosse (2) zur Positionierung der Haltevorrichtung (1) an der Fahrzeugkarosse (2) zumindest abschnittsweise in Anlage bringbar ist, **dadurch gekennzeichnet, dass** der zumindest eine Positionierabschnitt nach erfolgter Positionierung und Montage der Haltevorrichtung (1) von dieser lösbar ist.

2. Haltevorrichtung nach Anspruch 1, **dadurch gekennzeichnet, dass** diese aus einem polymeren Material besteht.

3. Haltevorrichtung nach Anspruch 1 oder 2, **dadurch gekennzeichnet, dass** die Haltevorrichtung in einem Spritzgießverfahren hergestellt ist.

4. Haltevorrichtung nach einem der vorangegangen Ansprüche, **dadurch gekennzeichnet, dass** die Haltevorrichtung leistenförmig ausgeführt ist.

5. Haltevorrichtung nach einem der vorangegangenen Ansprüche, **dadurch gekennzeichnet, dass** der zumindest eine Halteabschnitt (3) bei montiertem Bauteil dieses zumindest abschnittsweise umgreift.

6. Haltevorrichtung nach einem der vorangegangenen Ansprüche, **dadurch gekennzeichnet, dass** der zumindest eine Halteabschnitt (3) einen im Wesentlichen U-förmigen Querschnitt aufweist.

7. Haltevorrichtung nach Anspruch 6, **dadurch gekennzeichnet, dass** der der Fahrzeugkarosse (2) im montiertem Zustand zugewandte Schenkel des Halteabschnitts (3) zumindest abschnittsweise parallel zur Oberfläche der Fahrzeugkarosse (2) anordnungsbar ist.

8. Haltevorrichtung nach einem der vorangegangenen Ansprüche, **dadurch gekennzeichnet, dass** der Halteabschnitt (3) zumindest abschnittsweise stoffschlüssig mit der Oberfläche der Fahrzeugkarosse (2) verbunden ist.

9. Haltevorrichtung nach einem der vorangegangenen Ansprüche, **dadurch gekennzeichnet, dass** dieser zwei oder mehr Halteabschnitte (3) aufweist.

10. Haltevorrichtung nach einem der vorangegangenen Ansprüche, **dadurch gekennzeichnet, dass** die Haltevorrichtung leistenförmig ausgeführt ist und drei oder mehr Halteabschnitte (3) aufweist, wobei jeweils zwei benachbarte Halteabschnitte den gleichen Abstand zueinander aufweisen.

11. Haltevorrichtung nach einem der vorangegangenen Ansprüche, **dadurch gekennzeichnet, dass** der zumindest eine Positionierabschnitt (4) einstückig mit dem Halteabschnitt (3) verbunden ist und aus dem gleichen Material besteht.

12. Haltevorrichtung nach einem der vorangegangenen Ansprüche, **dadurch gekennzeichnet, dass** der zumindest eine Positionierabschnitt (4) einmalig lösbar mit dem Halteabschnitt (3) verbunden ist.

13. Haltevorrichtung nach einem der vorangegangenen Ansprüche, **dadurch gekennzeichnet, dass** der zumindest eine Positionierabschnitt (4) mit dem Schenkel des Halteabschnitts (3) verbunden ist, der der Fahrzeugkarosse (2) in montiertem Zustand zugewandt ist.

14. Haltevorrichtung nach einem der vorangegangenen Ansprüche, **dadurch gekennzeichnet, dass** der zumindest eine Positionierabschnitt (4) derart mit dem Halteabschnitt (3) verbunden ist, dass die Verbindungsstelle als Sollbruchstelle (5) ausgeführt ist.

15. Haltevorrichtung nach Anspruch 14, **dadurch gekennzeichnet, dass** die Sollbruchstelle (5) weiter vom gekrümmten Teil des Halteabschnitts (3) beabstandet ist als das Ende des Schenkels, der der Fahrzeugkarosse (2) im montierten Zustand des Halteabschnitts (3) abgewandt ist.

16. Haltevorrichtung nach Anspruch 14 oder 15, **dadurch gekennzeichnet, dass** die Sollbruchstelle (5) benachbart ist zu dem Bereich des Halteabschnitts (3), der stoffschlüssig mit der Oberfläche der Fahrzeugkarosse (2) verbunden ist.

17. Haltevorrichtung nach einem der vorangegangenen Ansprüche, **dadurch gekennzeichnet, dass** der zumindest eine Positionierabschnitt (4) einen Positionieranschlag (6) aufweist.

18. Haltevorrichtung nach Anspruch 17, **dadurch gekennzeichnet, dass** der Positionieranschlag (6) einen vorspringenden Steg aufweist, der zumindest abschnittsweise an einer Oberfläche der Fahrzeugkarosse (2) in Anlage bringbar ist.

19. Haltevorrichtung nach Anspruch 18, **dadurch gekennzeichnet, dass** der vorspringende Steg im Wesentlichen senkrecht zu dem Teil des Positionierabschnitts (4) angeordnet ist, der mit dem Halteabschnitt (3) verbunden ist.

20. Haltevorrichtung nach einem der vorangegangenen Ansprüche, **dadurch gekennzeichnet, dass** der zumindest eine Positionierabschnitt (4) einen Kraftangriffshebel (7) zum Lösen des Positionierabschnitts (4) vom montierten Halteabschnitt (3) aufweist.

21. Haltevorrichtung nach Anspruch 20, **dadurch gekennzeichnet, dass** der Kraftangriffshebel (7) aus der Verlängerung des Teils des Positionierabschnitts (4) gebildet wird, der mit dem Halteabschnitt (3) verbunden ist.

22. Haltevorrichtung nach einem der vorangegangenen Ansprüche, **dadurch gekennzeichnet, dass** die Haltevorrichtung (1) zwei oder mehr Positionierabschnitte (4) aufweist.

23. Bauteil, das mit einer Haltevorrichtung nach einem der vorangegangenen Ansprüche an einer Fahrzeugkarosse angeordnet ist.

24. Fahrzeug mit einer Haltevorrichtung nach einem der vorangegangenen Ansprüche.

## Claims

1. Retaining device (1) for fixing a component to a vehicle body (2), comprising at least one retaining section (3) for fixing the component and at least one positioning section (4) which can be brought into abutment at least zonally with at least one point of a surface of the vehicle body (2) for positioning the retaining device (1) on the vehicle body (2), **characterized in that** upon completion of the positioning and installation of the retaining device (1) the at least one positioning section can be detached therefrom.

2. Retaining device according to Claim 1, **characterized in that** it is made from a polymeric material.

3. Retaining device according to Claim 1 or 2, **characterized in that** the retaining device is produced using an injection-moulding method.

4. Retaining device according to any one of the preceding claims, **characterized in that** the retaining device is embodied in the form of a strip.

5. Retaining device according to any one of the preceding claims, **characterized in that** the at least one retaining section (3) extends at least zonally around the component when the latter has been installed.

6. Retaining device according to any one of the preceding claims, **characterized in that** the at least one retaining section (3) has a substantially U-shaped cross section.

7. Retaining device according to Claim 6, **characterized in that** the flange of the retaining section (3) facing towards the vehicle body (2) in the installed state can be arranged at least zonally parallel to the surface of the vehicle body (2).

8. Retaining device according to any one of the preceding claims, **characterized in that** the retaining section (3) is connected to the surface of the vehicle body (2) at least zonally by a material joint.

9. Retaining device according to any one of the preceding claims, **characterized in that** it has two or more retaining sections (3).

10. Retaining device according to any one of the preceding claims, **characterized in that** the retaining device is embodied in the form of a strip and has three or more retaining sections (3), each two adjacent retaining sections being equidistant from one another.

11. Retaining device according to any one of the preceding claims, **characterized in that** the at least one positioning section (4) is connected integrally to the retaining section (3) and is made from the same material.

12. Retaining device according to any one of the preceding claims, **characterized in that** the at least one positioning section (4) is connected to the retaining section (3) in a once-only detachable manner.

13. Retaining device according to any one of the preceding claims, **characterized in that** the at least one positioning section (4) is connected to the flange of the retaining section (3) which faces towards the vehicle body (2) in the installed state.

14. Retaining device according to any one of the preceding claims, **characterized in that** the at least one positioning section (4) is connected to the retaining section (3) such that the connection point is in the form of a predetermined break point (5).

15. Retaining device according to Claim 14, **characterized in that** the predetermined break point (5) is spaced further from the curved part of the retaining section (3) than the end of the flange which faces away from the vehicle body (2) in the installed state of the retaining section (3).

16. Retaining device according to Claim 14 or 15, **characterized in that** the predetermined break point (5) is adjacent to the region of the retaining section (3) which is connected to the surface of the vehicle body (2) by a material joint.

17. Retaining device according to any one of the preceding claims, **characterized in that** the at least one positioning section (4) has a positioning stop (6).

18. Retaining device according to Claim 17, **characterized in that** the positioning stop (6) has a projecting tab which can be brought into abutment at least zonally with a surface of the vehicle body (2).

19. Retaining device according to Claim 18, **characterized in that** the projecting tab is arranged substantially perpendicularly to the part of the positioning section (4) which is connected to the retaining section (3).

20. Retaining device according to any one of the preceding claims, **characterized in that** the at least one positioning section (4) has a force-application lever (7) for detaching the positioning section (4) from the installed retaining section (3).

21. Retaining device according to Claim 20, **characterized in that** the force-application lever (7) is formed from the prolongation of the part of the positioning section (4) which is connected to the retaining section (3).

22. Retaining device according to any one of the preceding claims, **characterized in that** the retaining device (1) has two or more positioning sections (4).

23. Component which is arranged on a vehicle body with a retaining device according to any one of the preceding claims.

24. Vehicle with a retaining device according to any one of the preceding claims.

## Revendications

1. Dispositif de support (1) pour la fixation d'un composant sur la carrosserie (2) d'un véhicule, qui présente au moins une portion de support (3) pour la fixation du composant, et qui présente au moins une portion de positionnement (4) qui peut être amenée au moins en partie en appui contre un point d'une surface de la carrosserie (2) du véhicule pour le positionnement du dispositif de support (1) contre la carrosserie (2) du véhicule, **caractérisé en ce que** l'au moins une portion de positionnement peut être détachée du dispositif de support (1) après le positionnement et le montage de ce dernier.

2. Dispositif de support selon la revendication 1, **caractérisé en ce qu'**il se compose d'un matériau polymère.

3. Dispositif de support selon la revendication 1 ou 2, **caractérisé en ce que** le dispositif de support est fabriqué par un procédé de moulage par injection.

4. Dispositif de support selon l'une quelconque des revendications précédentes, **caractérisé en ce que** le dispositif de support est réalisé sous forme de baguette.

5. Dispositif de support selon l'une quelconque des revendications précédentes, **caractérisé en ce que** l'au moins une portion de support (3) vient en prise autour du composant au moins en partie lorsque celui-ci est monté.

6. Dispositif de support selon l'une quelconque des revendications précédentes, **caractérisé en ce que** l'au moins une portion de support (3) présente une section transversale essentiellement en forme de U.

7. Dispositif de support selon la revendication 6, **caractérisé en ce que** la branche de la portion de support (3) tournée vers la carrosserie (2) du véhicule dans l'état monté peut être disposée au moins en partie parallèlement à la surface de la carrosserie (2) du véhicule.

8. Dispositif de support selon l'une quelconque des revendications précédentes, **caractérisé en ce que** la portion de support (3) est connectée au moins en partie par engagement de matière à la surface de la carrosserie (2) du véhicule.

9. Dispositif de support selon l'une quelconque des revendications précédentes, **caractérisé en ce qu'**il présente deux portions de support (3) ou plus.

10. Dispositif de support selon l'une quelconque des revendications précédentes, **caractérisé en ce que** le dispositif de support est réalisé sous forme de baguette et présente trois portions de support (3) ou plus, deux portions de support adjacentes présentant à chaque fois le même écart l'une par rapport à l'autre.

11. Dispositif de support selon l'une quelconque des revendications précédentes, **caractérisé en ce que** l'au moins une portion de positionnement (4) est connecté d'une seule pièce à la portion de support (3) et se compose du même matériau.

12. Dispositif de support selon l'une quelconque des revendications précédentes, **caractérisé en ce que** l'au moins une portion de positionnement (4) est connectée de manière détachable une fois à la portion de support (3).

13. Dispositif de support selon l'une quelconque des revendications précédentes, **caractérisé en ce que** l'au moins une portion de positionnement (4) est connectée à la branche de la portion de support (3) qui est tournée vers la carrosserie (2) du véhicule dans l'état monté.

14. Dispositif de support selon l'une quelconque des revendications précédentes, **caractérisé en ce que** l'au moins une portion de positionnement (4) est connectée à la portion de support (3) de telle sorte que le point de connexion soit réalisé sous forme de point destiné à la rupture (5).

15. Dispositif de support selon la revendication 14, **caractérisé en ce que** le point destiné à la rupture (5) est plus espacé de la partie courbe de la portion de support (3) que l'extrémité de la branche qui est opposée à la carrosserie (2) du véhicule dans l'état monté de la portion de support (3).

16. Dispositif de support selon la revendication 14 ou 15, **caractérisé en ce que** le point destiné à la rupture (5) est adjacent à la région de la portion de support (3) qui est connectée par engagement de matière à la surface de la carrosserie du véhicule (2).

17. Dispositif de support selon l'une quelconque des revendications précédentes, **caractérisé en ce que** l'au moins une portion de positionnement (4) présente une butée de positionnement (6).

18. Dispositif de support selon la revendication 17, **caractérisé en ce que** la butée de positionnement (6) présente une nervure saillante qui peut être amenée en appui au moins en partie contre une surface de la carrosserie (2) du véhicule.

19. Dispositif de support selon la revendication 18, **caractérisé en ce que** la nervure saillante est disposée essentiellement perpendiculairement à la partie de la portion de positionnement (4) qui est connectée à la portion de support (3).

20. Dispositif de support selon l'une quelconque des revendications précédentes, **caractérisé en ce que** l'au moins une portion de positionnement (4) présente un levier d'application de force (7) pour desserrer la portion de positionnement (4) de la portion de support montée (3).

21. Dispositif de support selon la revendication 20, **caractérisé en ce que** le levier d'application de force (7) est formé par le prolongement de la partie de la portion de positionnement (4) qui est connectée à la portion de support (3).

22. Dispositif de support selon l'une quelconque des revendications précédentes, **caractérisé en ce que** le dispositif de support (1) présente deux portions de positionnement (4) ou plus.

23. Composant qui est disposé avec un dispositif de support selon l'une quelconque des revendications précédentes sur une carrosserie de véhicule.

24. Véhicule comprenant un dispositif de support selon l'une quelconque des revendications précédentes.
